# FASCICULE DE BREVET EUROPEEN

(11) **EP 0 989 529 B1**
(45) Date de publication et mention de la délivrance du brevet: **26.03.2003**
(21) Numéro de dépôt: 99402065.9
(22) Date de dépôt: 16.08.1999
(51) Int. Cl.: G07F 7/10

(54) **Carte à puce permettant d'acceder à une application distante, terminal et système de communication associés et procédé pour accéder a l'application distante au moyen de cette carte à puce**
Chipkarte mit Zugriff auf eine entfernte Anwendung, Endgerät und zugehöriges Übertragungssystem und Verfahren zum Zugriff auf die entfernte Anwendung mittels dieser Chipkarte
Smart card for accessing a remote application, terminal and associated communication system and method for accessing this remote application using this smart card

(30) Priorité: 21.09.1998 FR 9811745
(43) Date de publication de la demande: 29.03.2000
(73) Titulaire: ALCATEL, 75008 Paris (FR)
(72) Inventeur: Pinault, Francis, 92270 Bois-Colombes (FR)
(74) Mandataire: Lamoureux, Bernard

(56) Documents cités:
- EP-A- 0 513 507
- EP-A- 0 733 992
- EP-A- 0 807 911
- FR-A- 2 657 445
- FR-A- 2 686 998
- US-A- 5 581 708
- US-A- 5 678 029

## Description

La présente invention concerne une carte à puce permettant d'accéder à une application distante, un terminal et un système de communication associés à cette carte à puce, ainsi qu'un procédé pour accéder à l'application distante au moyen de cette carte à puce.

Plus généralement, le domaine de l'invention est celui des systèmes de communication tels que des systèmes de communication filaire, des systèmes de communication cellulaire par exemple du type GSM (pour "Global System for Mobile communications" en anglais), des systèmes de téléphonie sans fil, par exemple du type DECT (pour "Digital European Cordless Communication" en anglais) ou CTS (pour "Cordless Telefon System" en anglais), ou encore des microordinateurs équipés par exemple d'un modem multifonctions permettant par exemple des accès au réseau Internet.

Pour améliorer leurs prestations, de plus en plus d'entreprises mettent à la disposition de leurs clients des applications distantes pour permettre aux clients de consulter plus facilement par exemple les offres de l'entreprise, ses produits et prix, et de procéder à différentes transactions. Ainsi par exemple, par l'intermédiaire de terminaux divers tels qu'un micro-ordinateur équipé d'un modem d'accès au réseau Internet ou un terminal de vidéotex connu au nom de Minitel, les clients peuvent, dans le cadre d'une application mise à leur disposition par une banque, consulter le solde de leur compte et faire des virements ou, dans le cadre d'une agence de voyage, consulter des horaires et des places disponibles et commander des billets de trains ou d'avion.

La demande de brevet FR 2 657 445 décrit un procédé de chargement de programme d'application dans une carte à puce. Néanmoins, ce procédé ne permet pas l'utilisation d'une même carte avec des terminaux de nature différente.

Cette situation est quelque peu déconcertante pour l'utilisateur, car pour chaque terminal, il doit connaître et fournir au terminal une multitude de paramètres tels que par exemple un numéro de téléphone, une adresse IP ( pour "Internet Protocol" en anglais) ou autre, ce qui peut prêter à confusion, en particulier si on veut accéder à plusieurs applications différentes.

En effet, en utilisant un micro-ordinateur, il n'accède pas de la même manière à une application choisie qu'avec par exemple un téléphone mobile ou un Minitel.

La demande de brevet EP 0 513 507 décrit une carte à puce supportant plusieurs protocoles de communication pour une utilisation sur des terminaux différents. Néanmoins cette carte ne permet pas d'accéder à une application d'un serveur.

La présente invention vise à simplifier pour un utilisateur l'accès à une application distante depuis un terminal quelconque.

A cet effet, l'invention a pour objet une carte à puce destinée à permettre à un utilisateur d'accéder à au moins une application choisie d'un serveur déterminé, par l'intermédiaire d'un terminal quelconque de communication utilisant au moins un parmi plusieurs modes de communication possibles et équipé d'un lecteur adapté de carte à puce, caractérisée en ce qu'elle comporte
- des moyens de mémorisation de jeux de paramètres spécifiques aux modes de communication possibles utilisés par les terminaux et aux applications pouvant être choisies,
- des moyens de reconnaissance du ou des modes de communication utilisables par le terminal dans lequel elle est insérée,
- reliés auxdits moyens de mémorisation et auxdits moyens de reconnaissance, des moyens de sélection d'un jeu de paramètres correspondant d'une part à un mode de communication reconnu par le terminal et d'autre part à ladite application choisie, et
- des moyens de délivrance du jeu de paramètres sélectionné audit terminal pour permettre un accès à l'application choisie à partir dudit terminal.

La carte à puce selon l'invention peut comporter une ou plusieurs des caractéristiques suivantes :
- chaque jeu de paramètres comporte une adresse, un type de protocole, des paramètres de protocole et des données relatives à la sécurité et au droit d'accès à ladite application choisie, l'adresse et le type de protocole de chaque jeu de paramètres étant adaptés au ou à un des modes de communication utilisables du terminal,
- dans le cas où ledit terminal possède plusieurs modes de communication utilisables, la carte comprend en outre, reliés auxdits moyens de sélection, des moyens de mémorisation d'un critère de priorité,
- ledit critère de priorité est un critère compris dans le groupe suivant : la vitesse maximale de transmission d'un mode de communication, la quantité d'informations à échanger avec ledit serveur, le coût de la communication entre le terminal et le serveur pour un mode de communication donné,
- les moyens de mémorisation de la carte à puce comprennent au moins deux jeux de paramètres correspondant respectivement à deux applications différentes.

L'invention a en outre pour objet un terminal de communication utilisant au moins un mode de communication et équipé d'un lecteur adapté pour une carte à puce telle que définie ci-dessus, caractérisé en ce qu'il comprend des moyens de fourniture de l'identité de chacun des modes de communication utilisables auxdits moyens de reconnaissance de la carte à puce, des moyens de récupération du jeu de paramètres délivré par lesdits moyens de délivrance, et des moyens d'exploitation de ce jeu de paramètres délivré pour établir l'accès à ladite application choisie.

Selon une autre caractéristique, le terminal est terminal d'un des types du groupe suivant : terminal téléphonique filaire, terminal téléphonique cellulaire, terminal téléphonique sans fil, micro-ordinateur.

L'invention a en outre pour objet un système de communication, caractérisé en ce qu'il comprend au moins une carte à puce telle que définie ci-dessus, au moins un terminal tel que défini ci-dessus et au moins un serveur d'au moins une application.

L'invention a également pour objet un procédé pour permettre à un utilisateur d'accéder à au moins une application choisie d'un serveur déterminé, l'accès étant réalisé par l'intermédiaire de différents terminaux quelconques de communication équipés de lecteurs adaptés de carte à puce, caractérisé en ce qu'il comporte les étapes suivantes :
- reconnaissance du ou des modes de communication utilisables par un terminal dans lequel elle est insérée,
- mémorisation de jeux de paramètres spécifiques audit aux modes de communication utilisables dudit terminal et à ladite au moins une application choisie,
- sélection d'un jeu de paramètres correspondant d'une part à un mode de communication reconnu dudit terminal et d'autre part à ladite application, et
- délivrance du jeu de paramètres sélectionné audit terminal pour permettre un accès à l'application choisie à partir dudit terminal.

Le procédé selon l'invention peut comporter en outre une ou plusieurs des caractéristiques suivantes :
- chaque jeu de paramètres mémorisé comporte une adresse, un type de protocole, des paramètres de protocole et des données relatives à la sécurité et au droit d'accès à ladite application choisie, l'adresse et le type de protocole de chaque jeu de paramètres étant adaptés à un seul mode de communication utilisable du terminal,
- dans le cas où ledit terminal peut utiliser plusieurs modes de communication, lors de l'étape de sélection de l'un des modes de communication reconnus, on prend en compte un critère de priorité.
- ledit critère de priorité est un critère compris dans le groupe suivant : la vitesse maximale de transmission d'un mode de communication, la quantité d'informations à échanger avec ledit serveur, le coût de la communication entre le terminal et le serveur pour un mode de communication donné,
- les jeux de paramètres sont téléchargés depuis le serveur de l'application choisie.

D'autres caractéristiques et avantages de l'invention ressortiront de la description suivante, donnée à titre d'exemple, sans caractère limitatif, en regard des dessins annexés sur lesquels :
La figure 1 est un schéma synoptique du système de communication selon l'invention, et
La Figure 2 est un organigramme montrant les étapes représentatives du procédé selon l'invention.

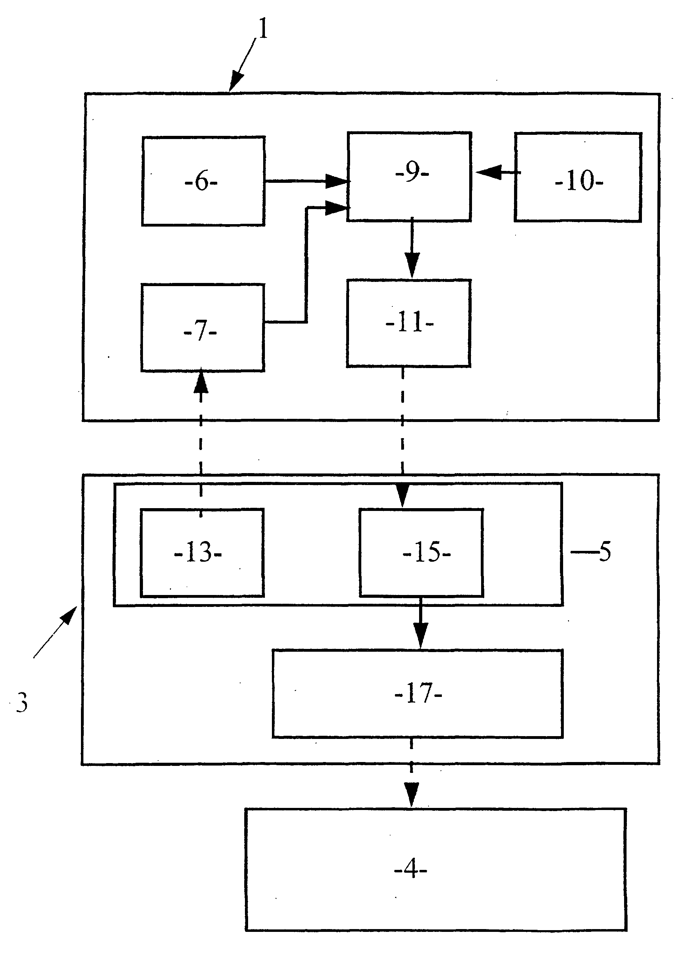

Sur la figure 1 est représenté de façon synoptique un schéma d'un système de communication selon l'invention. Ce système de communication comprend une carte à puce 1, un terminal 3 et un serveur 4.

La carte à puce 1 est destinée à permettre à un utilisateur d'accéder à au moins une application choisie du serveur 4 par l'intermédiaire du terminal 3 de communication utilisant au moins un mode de communication avec le serveur 4 et équipé d'un lecteur 5 adapté de carte à puce.

Le terminal 5 de communication est un terminal quelconque dans le sens qu'il peut être un terminal téléphonique filaire, un terminal téléphonique cellulaire, un terminal téléphonique sans fil, ou un micro-ordinateur. La carte peut donc être utilisée avec un groupe hétérogène de terminaux.

Il est commun à tous les différents terminaux à partir desquels l'utilisateur peut accéder à l'application choisie, qu'ils peuvent utiliser au moins un, voire plusieurs modes de communication et qu'ils sont tous équipés d'un lecteur 5 adapté pour la carte à puce 1.

La carte à puce 1 comporte des moyens 6 de mémorisation de jeux de paramètres spécifiques audit au moins un mode de communication utilisé par ledit terminal 3 et à l'application choisie. Chaque jeu de paramètres comporte par exemple une adresse, un type de protocole, des paramètres de protocole et des données relatives à la sécurité et au droit d'accès à ladite application choisie. Bien entendu, l'adresse et le type de protocole de chaque jeu de paramètres sont adaptés à un des modes de communication utilisables par les terminaux du groupe hétérogène.

Pour le cas où la carte 1 permet l'accès à plusieurs applications différentes, au moins un, de préférence plusieurs jeux de paramètres sont mémorisés dans les moyens 6 de mémorisation pour chacune des applications.

La carte 1 comprend également des moyens 7 de reconnaissance du ou des modes de communication utilisables dudit terminal 3 dans lequel elle est insérée.

En outre, reliés aux moyens 6 et 7, la carte 1 comporte des moyens 9 de sélection d'un jeu de paramètres mémorisé correspondant d'une part à un mode de communication reconnu dudit terminal et d'autre part à ladite application choisie.

De plus, les moyens 9 de sélection sont en outre reliés à des moyens 10 de mémorisation d'un critère de priorité pris en compte lors de la sélection. Un tel critère de priorité est en particulier intéressant lorsque le terminal dans lequel est insérée la carte, peut utiliser plusieurs modes de communication comme cela sera décrit plus loin.

Le critère de priorité peut être la vitesse maximale de transmission des modes de communication du terminal, la quantité d'informations à échanger avec ledit serveur, ou encore le coût de la communication entre le terminal et le serveur pour un mode de communication donné.

La sortie des moyens 9 de sélection est raccordée à des moyens 11 de délivrance du jeu de paramètres sélectionné audit terminal pour permettre un accès à l'application choisie à partir dudit terminal.

Par ailleurs, le lecteur 5 du terminal 3 comprend des moyens 13 de fourniture de l'identité de chaque mode de communication utilisable par ledit terminal auxdits moyens 7 de reconnaissance de la carte à puce 1, et des moyens 15 de récupération du jeu de paramètres délivré par lesdits moyens de délivrance.

La sortie des moyens 15 de récupération est reliée à des moyens 17 d'exploitation du jeu de paramètres délivré par les moyens 11, pour établir l'accès à ladite application choisie du serveur 4.

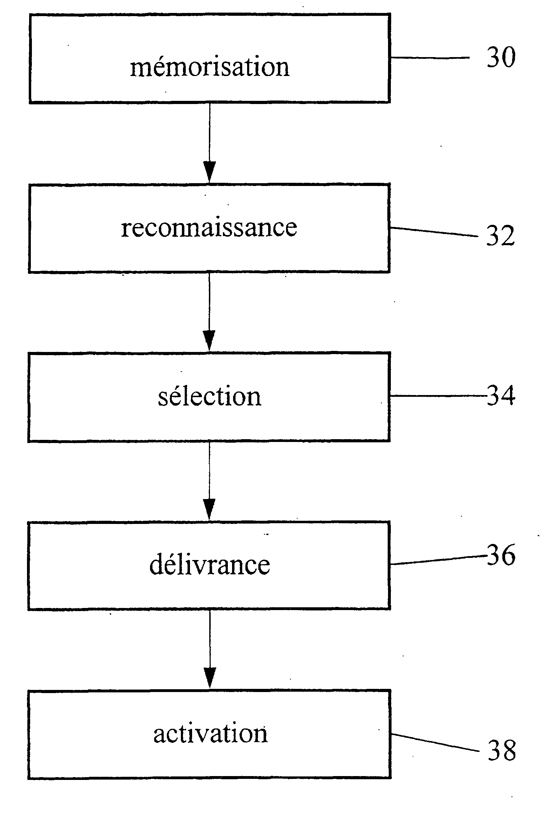

Le système de communication fonctionne selon le procédé de l'invention représenté en forme d'un organigramme à la figure 2.

Pour permettre à un utilisateur d'accéder à une ou plusieurs applications choisies du serveur 4, par l'intermédiaire d'un 3 des terminaux du groupe hétérogène, on mémorise lors d'une étape 30 dans les moyens 6 de mémorisation au moins un, de préférence plusieurs jeux de paramètres spécifiques à des modes de communication et à la ou aux application(s) choisie(s). Cette étape de mémorisation peut être réalisée par exemple par l'entreprise qui autorise l'accès et émet la carte à puce 1, ou peut être réalisé par un téléchargement.

Une fois que les jeux de paramètres sont enregistrés dans les moyens 6, la carte à puce 1 selon l'invention est opérationnelle.

Ensuite on insère la carte à puce 1 dans un terminal 3. Lors d'une étape 32, les moyens 13 du terminal fournissent aux moyens 7 de reconnaissance les modes de communication que le terminal peut utiliser.

Puis, lors de l'étape 34, un jeu de paramètres correspondant d'une part à au ou à un des modes de communication reconnus dudit terminal et d'autre part à l'application choisie. Cette sélection est réalisée en prenant en compte le critère de priorité mémorisé dans les moyens 10 de mémorisation, par exemple a quantité d'informations à échanger.

Enfin, lors de l'étape 36, les moyens 11 délivrent le jeu de paramètres sélectionné audit terminal 3 pour permettre, lors d'une étape 38 ultérieure, l'activation de l'accès à l'application choisie à partir dudit terminal 3.

A cet effet, les moyens 15 récupèrent le jeu de paramètre sélectionné et transfèrent celui-ci dans les moyens 17 d'exploitation du terminal 3.

On comprend donc que le système de communication et le procédé selon l'invention permettent de simplifier considérablement l'accès d'un utilisateur à une application distante choisie d'un serveur. En effet, pour accéder la même application, l'utilisateur peut se servir de manière indifférente de différents terminaux. Pour l'utilisateur, l'accès à l'application choisie est transparent.

De plus, la négociation initiale entre la carte 1 et le terminal 3 pendant laquelle le terminal 3 fournit par l'intermédiaire de ses moyens 13 ses modes de communication utilisables permet de sélectionner le mode de communication le plus approprié pour l'application choisie.

Ainsi par exemple pour une application permettant de consulter le solde d'un compte, il n'est pas nécessaire d'emprunter une communication via le réseau Internet. Un échange d'informations par un message court par l'intermédiaire du service SMS (pour "Short Message Service" en anglais ) est bien suffisant et bien moins coûteux.

## Revendications

1. Carte à puce (1) destinée à permettre à un utilisateur d'accéder à au moins une application choisie d'un serveur (4) déterminé, par l'intermédiaire d'un terminal (3) quelconque de communication utilisant au moins un parmi plusieurs modes de communication possibles et équipé d'un lecteur (5) adapté de carte à puce, **caractérisée en ce qu'**elle comporte
- des moyens (6) de mémorisation de jeux de paramètres spécifiques aux modes de communication possibles utilisés par les terminaux (3) et aux applications pouvant être choisies,
- des moyens (7) de reconnaissance du ou des modes de communication utilisables par le terminal (3) dans lequel elle est insérée,
- reliés auxdits moyens (6) de mémorisation et auxdits moyens (7) de reconnaissance, des moyens (9) de sélection d'un jeu de paramètres correspondant d'une part à un mode de communication reconnu par le terminal (3) et d'autre part à ladite application choisie, et
- des moyens (11) de délivrance du jeu de paramètres sélectionné audit terminal (3) pour permettre un accès à l'application choisie à partir dudit terminal (3).

2. Carte à puce selon la revendication 1, **caractérisée en ce que** chaque jeu de paramètres comporte une adresse d'un serveur, un type de protocole, des paramètres de protocole et des données relatives à la sécurité et au droit d'accès à ladite application choisie, l'adresse d'un serveur et le type de protocole de chaque jeu de paramètres étant adaptés au ou à un des modes de communication utilisables du terminal (3).

3. Carte à puce selon la revendication 1 ou 2, dans laquelle ledit terminal (3) possède plusieurs modes de communication utilisables, **caractérisée en ce qu'**elle comprend en outre, reliés auxdits moyens (9) de sélection, des moyens (10) de mémorisation d'un critère de priorité.

4. Carte à puce selon la revendication 3, **caractérisée en ce que** ledit critère de priorité est un critère compris dans le groupe suivant : la vitesse maximale de transmission d'un mode de communication, la quantité d'informations à échanger avec ledit serveur, le coût de la communication entre le terminal (3) et le serveur (4) pour un mode de communication donné.

5. Carte à puce selon l'une quelconque des revendications 1 à 4, **caractérisé en ce que** ses moyens (6) de mémorisation comprennent au moins deux jeux de paramètres correspondant respectivement à deux applications différentes.

6. Terminal de communication utilisant au moins un mode de communication et équipé d'un lecteur (5) adapté pour une carte à puce (1) selon l'une quelconque des revendications 1 à 5, **caractérisé en ce qu'**il comprend des moyens (13) de fourniture de l'identité de chaque mode de communication utilisable auxdits moyens (7) de reconnaissance de la carte à puce (1), des moyens (15) de récupération du jeu de paramètres délivré par lesdits moyens (11) de délivrance, et des moyens (17) d'exploitation de ce jeu de paramètres délivré pour établir l'accès à ladite application choisie.

7. Terminal selon la revendication 6, **caractérisé en ce qu'**il est terminal (3) d'un des types du groupe suivant : terminal téléphonique filaire, terminal téléphonique cellulaire, terminal téléphonique sans fil, micro-ordinateur.

8. Système de communication, **caractérisé en ce qu'**il comprend au moins une carte à puce (1) selon l'une quelconque des revendications 1 à 5, au moins un terminal (3) selon a revendication 6 ou 7 et au moins un serveur (4) d'au moins une application.

9. Procédé pour permettre à un utilisateur d'accéder à au moins une application choisie d'un serveur (4) déterminé, par l'intermédiaire d'un terminal (3) quelconque de communication utilisant au moins un parmi plusieurs modes de communication possibles et équipé d'un lecteur (5) adapté de carte à puce, **caractérisée en ce qu'**elle comporte les étapes suivantes :
- reconnaissance (32) du ou des modes de communication utilisables par un terminal dans lequel elle est insérée,
- mémorisation (30) de jeux de paramètres spécifiques aux modes de communication utilisés par les terminaux et aux applications pouvant être choisies,
- sélection (34) d'un jeu de paramètres correspondant d'une part à un mode de communication reconnu par le terminal et d'autre part à ladite application, et
- délivrance (36) du jeu de paramètres sélectionné audit terminal pour permettre un accès à l'application choisie à partir du terminal.

10. Procédé selon la revendication 9, **caractérisé en ce que** chaque jeu de paramètres mémorisé comporte une adresse d'un serveur, un type de protocole, des paramètres de protocole et des données relatives à la sécurité et au droit d'accès à ladite application choisie, l'adresse d'un serveur et le type de protocole de chaque jeu de paramètres étant adaptés à un seul mode de communication utilisable du terminal.

11. Procédé selon la revendication 9 ou 10, dans laquelle ledit terminal (3) peut utiliser plusieurs modes de communication, **caractérisée en ce que** lors de l'étape de sélection (34) de l'un des modes de communication reconnus, on prend en compte un critère de priorité.

12. Procédé selon la revendication 11, **caractérisée en ce que** ledit critère de priorité est un critère compris dans le groupe suivant : la vitesse maximale de transmission d'un mode de communication, la quantité d'informations à échanger avec ledit serveur, le coût de la communication entre le terminal et le serveur pour un mode de communication donné.

## Claims

1. A microchip card (1) for enabling a user to access at least one chosen application on a particular server (4) by means of any communication terminal (3) using at least one mode of communication and fitted with a reader (5) compatible with the microchip card, **characterized in that** it includes:
- memory means (6) for storing sets of parameters specific to the possible modes of communication used by the terminals (3) and to the chosen applications,
- means (7) for recognizing at least one mode of communication used by the terminal (3) in which it is inserted,
- means (9) connected to said memory means (6) and to said recognition means (7) for selecting a set of parameters corresponding to a recognized mode of communication of the terminal (3) and to said chosen application, and
- means (11) for delivering the selected set of parameters to said terminal (3) to enable access to the chosen application from said terminal (3).

2. A microchip card according to claim 1, **characterized in that** each set of parameters includes an address of a server, a protocol type, protocol parameters and data relating to security and to the right of access to said chosen application, the address of a server and the protocol type of each set of parameters being compatible with the mode of communication or one of the modes of communication used by the terminal (3).

3. A microchip card according to claim 1 or 2, wherein said terminal (3) can use several modes of communication, **characterized in that** it further comprises memory means (10) for storing a priority criterion connected to said selector means (9).

4. A microchip card according to claim 3, **characterized in that** said priority criterion is a criterion included in the following group: the maximum transmission speed of a mode of communication, the quantity of data to be exchanged with said server, the cost of the call between the terminal (3) and the server (4) for a given mode of communication.

5. A microchip card according to any of claims 1 to 4, **characterized in that** said memory means (6) comprise at least two sets of parameters respectively corresponding to two different applications.

6. A communication terminal using at least one mode of communication and equipped with a reader (5) compatible with a microchip card (1) according to any of claims 1 to 5, **characterized in that** it comprises means (13) for supplying the identity of each mode of communication used to said recognition means (7) of the microchip card (1), means (15) for recovering the set of parameters delivered by said delivery means (11), and means (17) for processing said delivered set of parameters to establish access to said chosen application.

7. A terminal according to claim 6, **characterized in that** it is a terminal (3) of one of the types from the following group: cable telephone terminal, cellular telephone terminal, cordless telephone terminal, microcomputer.

8. A communication system, **characterized in that** it comprises at least one microchip card (1) according to any of claims 1 to 5, at least one terminal (3) according to claim 6 or 7 and at least one server (4) of at least one application.

9. A method of enabling a user to access at least one chosen application of a particular server (4) by means of any communication terminal (3) using at least one mode of communication and fitted with a reader (5) compatible with the microchip card, **characterized in that** it includes the following steps:
- recognizing (32) the at least one mode of communication used by a terminal in which it is inserted,
- storing (30) sets of parameters specific to the modes of communication used by the terminals and to the chosen applications,
- selecting (34) a set of parameters corresponding to a recognized mode of communication of the terminal and to said application, and
- delivering (36) the selected set of parameters to said terminal to enable access to the chosen application from the terminal.

10. A method according to claim 9, **characterized in that** each stored set of parameters includes an address of a server, a protocol type, protocol parameters and data relating to security and to the right of access to said chosen application, the address of a server and the protocol type of each set of parameters being compatible with a single mode of communication that can be used by the terminal.

11. A method according to claim 9 or 10, wherein said terminal (3) can use several modes of communication, **characterized in that** a priority criterion is taken into account in the step selecting (34) one of the recognized modes of communication.

12. A method according to claim 11, **characterized in that** said priority criterion is a criterion included in the following group: the maximum speed of transmission of a mode of communication, the quantity of data to be exchanged with said server, the cost of the call between the terminal and the server for a given mode of communication.

## Patentansprüche

1. Chipkarte (1), die dazu bestimmt ist, einem Benutzer den Zugriff auf wenigstens eine ausgewählte Anwendung eines festgelegten Servers (4) über ein beliebiges Kommunikationsendgerät (3) zu ermöglichen, das wenigstens einen unter mehreren möglichen Kommunikationsmodi verwendet und mit einem angepassten Chipkarten-Lesegerät (5) ausgestattet ist, **dadurch gekennzeichnet, dass** sie umfasst:
- Mittel (6) zum Speichern von für die möglichen von den Endgeräten (3) verwendeten Kommunikationsmodi und die auswählbaren Anwendungen spezifischen Parametersätzen,
- Mittel (7) zum Erkennen des oder der Kommunikationsmodi, die von dem Endgerät (3) verwendbar sind, in die sie eingefügt ist,
- verbunden mit den Speichermitteln (6) und den Erkennungsmitteln (7), Mittel (9) zum Auswählen eines Parametersatzes, der einerseits einem von dem Endgerät (3) erkannten Kommunikationsmodus und andererseits der ausgewählten Anwendung entspricht, und
- Mittel (11) zum Liefern des ausgewählten Parametersatzes an das Endgerät (3), um einen Zugriff auf die gewünschte Anwendung von dem Endgerät (3) aus zu ermöglichen.

2. Chipkarte nach Anspruch 1, **dadurch gekennzeichnet, dass** jeder Parametersatz eine Adresse eines Servers, einen Protokolltyp, Protokollparameter und Daten betreffend die Sicherheit und das Zugriffsrecht auf die ausgewählte Anwendung umfasst, wobei die Adresse eines Servers und der Protokolltyp jedes Satzes von Parametern an den oder die durch das Endgerät (3) verwendbaren Kommunikationsmodi angepasst ist.

3. Chipkarte nach Anspruch 1 oder 2, bei der das Endgerät (3) mehrere verwendbare Kommunikationsmodi aufweist, **dadurch gekennzeichnet, dass** sie ferner, verbunden mit den Auswahlmitteln (9), Mittel (10) zum Speichern eines Prioritätskriteriums aufweist.

4. Chipkarte nach Anspruch 3, **dadurch gekennzeichnet, dass** das Prioritätskriterium ein Kriterium aus der folgenden Gruppe ist: maximale Übertragungsgeschwindigkeit eines Kommunikationsmodus, Menge der mit dem Server auszutauschenden Informationen, Kosten der Kommunikation zwischen dem Endgerät (3) und dem Server (4) für einen gegebenen Kommunikationsmodus.

5. Chipkarte nach einem beliebigen der Ansprüche 1 bis 4, **dadurch gekennzeichnet, dass** ihre Speichermittel (6) wenigstens zwei Sätze von Parametern enthalten, die jeweils zwei verschiedenen Anwendungen entsprechen.

6. Telekommunikationsendgerät, das wenigstens einen Kommunikationsmodus verwendet und mit einem Lesegerät (5) ausgestattet ist, das an eine Chipkarte (1) nach einem beliebigen der Ansprüche 1 bis 5 angepasst ist, **dadurch gekennzeichnet, dass** es Mittel (13) zum Liefern der Identität jedes verwendbaren Kommunikationsmodus an die Erkennungsmittel (7) der Chipkarte (1), Mittel (15) zur Wiedergewinnung des von den Mitteln zum Liefern (11) gelieferten Parametersatzes und Mittel (17) zur Nutzung dieses gelieferten Parametersatzes zum Etablieren des Zugriffs auf die ausgewählte Anwendung umfasst.

7. Endgerät nach Anspruch 6, **dadurch gekennzeichnet, dass** es ein Endgerät (3) eines der Typen der folgenden Gruppe ist: Schnur-Telefon-Endgerät, zellulares Telefon-Endgerät, schnurloses Telefon-Endgerät, Mikrocomputer.

8. Kommunikationssystem, **dadurch gekennzeichnet, dass** es wenigstens eine Chipkarte (1) nach einem beliebigen der Ansprüche 1 bis 5, wenigstens ein Endgerät (3) nach Anspruch 6 oder 7 und wenigstens einen Server (4) für wenigstens eine Anwendung umfasst.

9. Verfahren zum Ermöglichen des Zugriffs eines Anwenders auf wenigstens eine ausgewählte Anwendung eines festgelegten Servers (4) über ein beliebiges Kommunikations-Endgerät (3), das wenigstens einen unter mehreren möglichen Kommunikationsmodi verwendet und mit einem für eine Chipkarte angepassten Lesegerät (5) ausgestattet ist, **gekennzeichnet durch** die folgenden Schritte:
- Erkennen (32) des oder der Kommunikationsmodi, die **durch** ein Endgerät verwendbar sind, in die sie eingefügt ist,
- Speichern (30) von für die von den Endgeräten verwendbaren Kommunikationsmodi und die auswählbaren Anwendungen spezifischen Parametersätzen,
- Auswählen (34) eines Parametersatzes, der einerseits einem von dem Endgerät erkannten Kommunikationsmodus und andererseits der Anwendung entspricht, und
- Liefern (36) des ausgewählten Parametersatzes an das Endgerät, um einen Zugriff auf die ausgewählte Anwendung über das Endgerät zu ermöglichen.

10. Verfahren nach Anspruch 9, **dadurch gekennzeichnet, dass** jeder gespeicherte Parametersatz eine Adresse eines Servers, einen Protokolltyp, Protokollparameter und die Sicherheit und das Zugriffsrecht auf die ausgewählte Anwendung betreffende Daten umfasst, wobei die Adresse eines Servers und der Protokolltyp jedes Parametersatzes an einen einzigen anwendbaren Kommunikationsmodus des Endgeräts angepasst sind.

11. Verfahren nach Anspruch 9 oder 10, bei dem das Endgerät (3) mehrere Kommunikationsmodi verwenden kann, **dadurch gekennzeichnet, dass** beim Schritt der Auswahl (34) eines der erkannten Kommunikationsmodi ein Prioritätskriterium berücksichtigt wird.

12. Verfahren nach Anspruch 11, **dadurch gekennzeichnet, dass** das Prioritätskriterium ein Kriterium aus der folgenden Gruppe ist: maximale Übertragungsgeschwindigkeit eines Kommunikationsmodus, Menge der mit dem Server auszutauschenden Informationen, Kosten der Kommunikation zwischen dem Endgerät und dem Server für einen gegebenen Kommunikationsmodus.
